**Europäisches Patentamt**

**European Patent Office**

**Office européen des brevets**

(19)

(11) Veröffentlichungsnummer : **0 096 237**
**B1**

(12)           **EUROPÄISCHE PATENTSCHRIFT**

(45) Veröffentlichungstag der Patentschrift :
16.04.86

(51) Int. Cl.⁴ : **C 09 D 11/10, C 09 D   3/80**

(21) Anmeldenummer : **83104702.2**

(22) Anmeldetag : **13.05.83**

(54) **Alkoholgelöste Druckfarbe oder Lack.**

(30) Priorität : **03.06.82 DE 3220909**

(43) Veröffentlichungstag der Anmeldung :
**21.12.83 Patentblatt 83/51**

(45) Bekanntmachung des Hinweises auf die Patenterteilung : **16.04.86 Patentblatt 86/16**

(84) Benannte Vertragsstaaten :
**CH DE FR GB LI NL**

(56) Entgegenhaltungen :
**FR-A- 2 276 362**
**FR-A- 2 294 193**
**US-A- 3 764 587**

(73) Patentinhaber : **Röhm GmbH**
**Kirschenallee Postfach 4242**
**D-6100 Darmstadt 1 (DE)**

(72) Erfinder : **Elser, Wilhelm**
**Am Sportfeld 1**
**D-6103 Griesheim (DE)**
Erfinder : **Munzer, Manfred, Dr.**
**Hunsrückstrasse 15**
**D-6140 Bensheim 1 (DE)**

## Beschreibung

### Gebiet der Erfindung

Die Erfindung betrifft Druckfarben oder Lacke, enthaltend ein Bindemittel, einen niederen Alkohol als Lösungsmittel und vorzugsweise einen gelösten oder ungelösten Farbstoff, insbesondere ein Pigment. Druckfarben und Lacke dieser Art werden zum Bedrucken oder Lackieren von Kunststoffen, insbesondere Kunststoffolien verwendet. Bei den Druckverfahren stehen der Flexodruck und Tiefdruck im Vordergrund.

### Stand der Tecknik

Druckfarben in alkoholischer Lösung sind schon aus FR-1 512 257 bekannt. Sie sind zu 10 bis 20 % aus einem Hydroxypropylester der Acryl- oder Methacrylsäure, zu 1 bis 5 % aus Acryl- oder Methacrylsäure und zum übrigen Teil aus $C_{1-4}$-Alkyl(meth)acrylaten aufgebaut. Als derartige Ester werden z. B. Methyl- oder n-Butylester verwendet. Diese Bindemittel sind in alkoholischer Lösung mit Nitrocellulose nicht genügend verträglich. Die Kratzfestigkeit, Filmhärte und Witterungsbeständigkeit der mit diesen Druckfarben hergestellten Drucke sind unbefriedigend.

Alkohollösliche Bindemittel für Flexodruckfarben und Kunststofflacke sind auch in DE-24 31 412 beschrieben. Es handelt sich um Mischpolymerisate von Äthylestern und Hydroxyalkylestern der Acryl- und Methacrylsäure. Die mit diesen Bindemitteln hergestellten Druckfarben ergeben harte, kratzfeste und witterungsbeständige Drucke, lassen sich aber mit Nitrocellulose nicht kombinieren.

### Aufgabe und Lösung

Es war eine Druckfarbe oder ein Lack in alkoholischer Lösung zu finden, der mit alkohollöslichen Celluloseestern, insbesondere Nitrocellulose, auch dann voll verträglich ist, wenn keine oder nur sehr geringe Mengen von Glykoläthern als Lösungsmittelkomponente angewendet werden. Auf Kunststoff sollen Drucke von hoher Heißsiegelbeständigkeit herstellbar sein. Die gestellte Aufgabe wird durch die Druckfarben oder Lacke gemäß den Patentansprüchen gelöst.

### Vorteile

Polyisopropylmethacrylat ist in Äthan 1 vollständig löslich, jedoch sind die Lösungen mit alkoholischen Lösungen von Nitrocellulose nicht verträglich. Die gleiche Unverträglichkeit beobachtet man bei Mischpolymerisaten anderer Acryl- oder Methacrylester mit hydrophilen Comonomeren, wie Acryl- oder Methacrylsäure und ihren Hydroxyalkylestern. Überraschenderweise sind im Gegensatz zu allen übrigen Mischpolymerisaten dieser Art gerade die Mischpolymerisate von Isopropylmethacrylat mit hydrophilen Comonomeren in rein alkoholischer Lösung mit Nitrocellulose voll verträglich. Dadurch eröffnet sich die Möglichkeit, Bindemittelgemische aus den genannten Mischpolymerisaten und alkohollöslichen Celluloseestern einzusetzen, welche sich durch erhöhte Siegelfestigkeit auszeichnen. Weitere Vorteile, die sich aus der Verwendung der gekennzeichneten Mischpolymerisate ergeben, sind die gute Pigmentierbarkeit und die Härte und die gute Weichmachersperrwirkung der erzeugten Drucke, insbesondere auf Kunststoffolien. Alle diese Vorteile sind ohne Anwendung größerer Mengen der teuren Glykoläther als Lösungsmittelbestandteil erreichbar. Diese werden — wenn überhaupt — nur in den aus anderen anwendungstechnischen Gründen erforderlichen, geringen Mengen eingesetzt.

### Anwendung

Die neuen Druckfarben und Lacke eignen sich für den Flexodruck und den Tiefdruck auf verschiedenen Substraten und vorzugsweise auf Kunststoffolien. Ein wichtiges Anwendungsgebiet ist das Bedrucken von tiefziehbaren PVC-Folien, aus welchen heißsiegelbare Verpackungsbehälter hergestellt werden. Weiterhin können in gleicher Weise aufgebaute Lacke zum Beschichten von Folien und anderen Substraten eingesetzt werden. Dafür kommen der Walzenauftrag, Besprühen und andere Beschichtungsverfahren in Betracht.

### Zusammensetzung

Die erfindungsgemäßen Druckfarben und Lacke enthalten vorzugsweise 10 bis 30 Gew.-% Bindemittel, bezogen auf das Gesamtgewicht. Wenn Pigmente eingesetzt werden, beträgt ihr Anteil am Gesamtgewicht im allgemeinen etwa 0,5 bis 20 Gew.-%. Es werden die üblichen Druckfarbenpigmente in Pulver- oder Pastenform eingesetzt. Lösliche Farbstoffe können in weitaus geringerer Menge, beispielsweise ab 0,1 Gew.-%, eingesetzt werden.

Als Lösungsmittel werden niedere Alkohole verwendet; dies sind die $C_{1-4}$-Alkohole. Von diesen werden vor allem Äthanol und Isopropanol eingesetzt. Äthanol ist bevorzugt. Geringe Mengen Wasser, im allgemeinen nicht über 5 bis 10 %, können mitverwendet werden. Ebenso kann man zur Verbesserung der Verlaufeigenschaften geringe Mengen Glykoläther, beispielsweise 5 bis 10 % vom Gesamtgewicht des Lösungsmittels, mitverwenden.

### Das Bindemittel

besteht aus einem Gemisch aus dem Mischpolymerisat des Isopropylmethacrylats mit einem alkohollöslichen Celluloseester. Neben alkohollöslichen Celluloseacetaten und -butyraten ist vor allem alkohollösliche Nitrocellulose zu nennen. Ihr Stickstoffgehalt liegt vorzugsweise zwischen 10,6 und 11,2 Gew.-%. Das Mischungsverhältnis des Mischpolymerisats zu dem Celluloseester liegt vorzugsweise im Bereich von 20 : 80 bis 80 : 20.

Das Mischpolymerisat ist zu 30 bis 90 Gew.-% aus Isopropylmethacrylat aufgebaut. Die hydrophilen Comonomeren bilden 10 bis 70 Gew.-% des Mischpolymerisats und ergänzen sich im Regelfall mit dem Isopropylmethacrylat auf 100 %. Es können jedoch begrenzte Mengen, vorzugsweise höchstens 30 Gew.-% des Mischpolymerisats, aus nicht-hydrophilen Comonomeren aufgebaut sein, wie z. B. niederen Acryl- oder Methacrylestern, sofern die Alkohollöslichkeit und die Verträglichkeit mit Celluloseestern gewahrt bleiben.

Hydrophile Comonomere im Sinne der Erfindung sind solche, die bei Raumtemperatur wenigstens 5 %ige, vorzugsweise wenigstens 10 %ige wäßrige Lösungen ergeben. Die wichtigsten Beispiele dieser Comonomeren sind $\alpha,\beta$-ungesättigte, polymerisierbare Carbonsäuren, wie Acryl- und Methacrylsäure oder gegebenenfalls Malein-, Fumar- oder Itakonsäure sowie Hydroxyalkylester dieser Säuren, insbesondere Hydroxyester der Acryl- oder Methacrylsäure von $C_{2-4}$-Glykolen.

Die hydrophilen Comonomeren verbessern die Alkohollöslichkeit und die Verträglichkeit mit Nitrocellulose. Da hohe Anteile an Säuremonomeren die Wasserbeständigkeit der Drucke beeinträchtigen können, werden ungesättigte Carbonsäuren vorzugsweise in Kombination mit den genannten Hydroxyalkylestern zum Aufbau des Mischpolymerisats eingesetzt. Vorzugsweise liegt der Anteil der ungesättigten Carbonsäure zwischen 5 und 30 Gew.-% und der Anteil der Hydroxyalkylester mindestens bei 5 Gew.-%, bezogen auf das Gesamtgewicht des Mischpolymerisats.

Die reduzierte Viskosität des Mischpolymerisats, bestimmt in Dimethylformamid-Lösung bei 20 °C, liegt mit Vorteil unter 50 ml/g, vorzugsweise im Bereich von 20 bis 30 ml/g. Diese Viskositätswerte lassen sich bei der Herstellung des Mischpolymerisats in an sich bekannter Weise durch die Mitverwendung von Übertragungsreglern erreichen.

Beispiele

1. Herstellung eines Bindemittels .

Eine Mischung aus 70 Gewichtsteilen Isopropylmethacrylat, 20 Gew.-Teilen Methacrylsäure und 10 Gew.-Teilen 2-Hydroxypropylacrylat wird unter Zusatz von 0,1 % Dilauroylperoxid als Initiator und 0,5 % n-Dodecylmercaptan als Molekulargewichtsregler in einem Folienschlauch bei einer Temperatur von 50 °C im Wasserbad 40 Std. polymerisiert. Zur Erniedrigung des Restmonomerengehaltes wird das erhaltene Polymerisat anschließend 10 Std. bei 110 °C im Trockenschrank getempert.

$\eta$ sp/c (gemessen bei 20 °C in Dimethylformamid) 37 cm³/g.

2. Vergleichsversuch

Eine Mischung aus 76 Gew.-% Ethylmethacrylat, 8 Gew.-% Methacrylsäure und 16 Gew.-% 2-Hydroxypropylmethacrylat wird unter Zusatz von 0,2 Gew.-% Dilauroylperoxid und 0,07 Gew.-% Thioglykol unter den in Beispiel 1 angegebenen Bedingungen polymerisiert.

$\eta$ sp/c (gemessen bei 20 °C in Dimethylformamid) 32 cm³/g.

3. Herstellung eines Überdrucklackes

10 Gew.-Teile des in Beispiel 1 hergestellten Polymerisats und 10 Gew.-Teile 100 %ige Nitrocellulose A 400 (Nitrocellulose der Fa. Wolff & Co., Walsrode wird mit 35 % Äthanol angefeuchtet geliefert) werden in 76 Teilen Äthanol und 4 Teilen Äthylenglykolmonoäthyläther gelöst.

Dieser Lack ist klar und zeigt auch beim Abkühlen auf Temperaturen von 0-5 °C keine Ausfällungen.

Zur Ermittlung der Siegelfestigkeit wird der Lack mit einer Trockenschichtdicke von 5-10 µm auf eine Aluminiumfolie aufgetragen und getrocknet. Die Prüfung erfolgte auf einem Wärmekontakt-Heißsiegelgerät, Type HSG/ET der Fa. Otto Brugger, Minchen. Unter Versiegelungsbedingungen war keine Verklebung der lackierten Aluminiumfolie gegen unlackiertes Aluminium bei Temperaturen von 180 °C unter einem Druck von 3 kg/cm² innerhalb einer Zeit von 1 sec festzustellen, d. h. der Anstrich ist bis zu dieser Temperatur siegelfest.

Mit dem im Vergleichsversuch (2) genannten Polymerisat ist ein Überdrucklack der oben genannten Zusammensetzung infolge mangelnder Löslichkeit bzw. Nitrocelluloseverträglichkeit nicht herstellbar. Einwandfreie Verträglichkeit wird in diesem Fall nur dann erzielt, wenn der Anteil von Äthylglykolmonoäthyläther im Lösungsmittelgemisch bei mindestens 50 % liegt, was aus lack- und drucktechnischen Gründen nicht vertretbar ist.

4. Herstellung einer Druckfarbe

Der oben genannte Überdrucklack wurde in einem Labordispergiergerät mit Eisenoxidschwarz pigmentiert. Das Pigment/Bindemittelverhältnis lag bei 1/2.

Anstriche aus dieser Druckfarbe zeigten die im Verpackungsdruck geforderte Seifenbeständigkeit nach DIN 16524.

**Patentansprüche**

1. Druckfarbe oder Lack, enthaltend ein Bindemittel, das wenigstens zum Teil aus einem Mischpolymerisat aus niederen Acryl- oder Methacrylestern und hydrophilen Comonomeren aufge-

baut ist, und einen C$_{1-4}$ Alkohol als Lösungsmittel, dadurch gekennzeichnet, daß das Bindemittel aus einem Gemisch eines Mischpolymerisats von 30 bis 90 Gew.-% Isopropylmethacrylat und 70 bis 10 Gew.-% wenigstens eines hydrophilen Comonomeren und aus einem alkohollöslichen Celluloseester im Verhältnis 20 : 80 bis 80 : 20 besteht.

2. Druckfarbe oder Lack nach Anspruch 1, dadurch gekennzeichnet, daß das hydrophile Comonomer eine ungesättigte polymerisierbare Carbonsäure und/oder ein Hydroxyalkylester einer solchen Carbonsäure ist.

3. Druckfarbe oder Lack nach den Ansprüchen 1 oder 2, dadurch gekennzeichnet, daß das Mischpolymerisat zu 5 bis 30 Gew.-% aus einer ungesättigten polymerisierbaren Carbonsäure und zu mindestens 5 Gew.-% aus einem Hydroxyalkylester einer solchen Säure aufgebaut ist.

4. Druckfarbe oder Lack nach den Ansprüchen 1 bis 3, gekennzeichnet durch den Gehalt eines gelösten oder ungelösten Farbstoffes.

## Claims

1. Printing ink or lacquer containing a binder which is made up at least partially of a copolymer of lower acrylic or methacrylic esters and hydrophilic comonomers, and a C$_{1-4}$ alcohol as solvent, characterised in that the binder consists of a mixture of a copolymer of 30 to 90 % by weight of isopropylmethacrylate and 70 to 10 % by weight of at least one hydrophilic comonomer and an alcohol-soluble cellulose ester in a ratio of 20 : 80 to 80 : 20.

2. Printing ink or lacquer as claimed in claim 1, characterised in that the hydrophilic comonomer is an unsaturated polymerisable carboxylic acid and/or a hydroxyalkylester of such a carboxylic acid.

3. Printing ink or lacquer as claimed in claim 1 or 2, characterised in that the copolymer is made up of 5 to 30 % by weight of an unsaturated polymerisable carboxylic acid and at least 5 % by weight of a hydroxyalkylester of such an acid.

4. Printing ink or lacquer as claimed in claims 1 to 3, characterised in that it contains a dissolved or undissolved dyestuff.

## Revendications

1. Encre d'imprimerie ou vernis, contenant un liant qui est constitué, au moins en partie, d'un copolymère d'esters acryliques ou méthacryliques inférieurs et de comonomères hydrophiles, et un alcool en C$_{1-4}$ servant de solvant, caractérisé en ce que le liant se compose d'un mélange d'un copolymère de 30 à 90 % en poids de méthacrylate d'isopropyle et de 70 à 10 % en poids d'au moins un comonomère hydrophile, et d'un ester cellulosique soluble dans l'alcool, dans le rapport 20 : 80 à 80 : 20.

2. Encre d'imprimerie ou vernis selon la revendication 1, caractérisé en ce que le comonomère hydrophile est un acide carboxylique polymérisable insaturé et/ou un ester hydroxyalkylique d'un tel acide carboxylique.

3. Encre d'imprimerie ou vernis selon la revendication 1 ou 2, caractérisé en ce que le copolymère est composé, pour 5 à 30 % en poids, d'un acide carboxylique polymérisable insaturé et, pour 5 % en poids au moins, d'un ester hydroxyalkylique d'un tel acide.

4. Encre d'imprimerie ou vernis selon l'une quelconque des revendications 1 à 3, caractérisé en ce qu'il contient un colorant dissous ou non dissous.